# EUROPÄISCHE PATENTSCHRIFT

(11) **EP 0 872 633 B1**
(45) Veröffentlichungstag und Bekanntmachung des Hinweises auf die Patenterteilung: **27.03.2002**
(21) Anmeldenummer: 98103882.1
(22) Anmeldetag: 05.03.1998
(51) Int. Cl.: F01N 9/00, F01N 3/08, F02D 41/02, B01D 53/94

(54) **Verfahren zur Stickoxidreduzierung im Abgas einer Brennkraftmaschine**
Process for the reduction of nitrogen oxides in the exhaust gas of an internal combustion engine
Procédé pour la réduction des oxydes d'azote des gaz d'échappement de moteur à combustion interne

(30) Priorität: 18.04.1997 DE 19716275
(43) Veröffentlichungstag der Anmeldung: 21.10.1998
(73) Patentinhaber: Volkswagen Aktiengesellschaft, 38436 Wolfsburg (DE)
(72) Erfinder: Bosse, Rolf, Dipl.-Ing., 38440 Wolfsburg (DE); Pott, Ekkehard, Dipl.-Ing., 38518 Gifhorn (DE); Bergholz, Ralf, Dr., 38108 Braunschweig (DE)

(56) Entgegenhaltungen:
- EP-A- 0 713 959
- DE-A- 19 511 548
- DE-C- 19 543 219
- US-A- 5 595 060
- PATENT ABSTRACTS OF JAPAN vol. 018, no. 212 (M-1593), 15. April 1994 & JP 06 010725 A (TOYOTA MOTOR CORP), 18. Januar 1994
- PATENT ABSTRACTS OF JAPAN vol. 095, no. 002, 31. März 1995 & JP 06 317142 A (TOYOTA MOTOR CORP), 15. November 1994

## Beschreibung

Die Erfindung betrifft ein Verfahren zur Stickoxidreduzierung im Abgas einer Brennkraftmaschine, insbesondere für Kraftfahrzeuge, und einen an das Verfahren angepaßten Turbodiesel.

Zur Reduzierung des CO₂- Ausstoßes von Kraftfahrzeugen ist es bekannt, diese im Magerbetrieb zu betreiben, d.h. mit λ > 1, wobei λ das Verhältnis der Gesamtsauerstoffkonzentration und der Sauerstoffkonzentration zur vollständigen Verbrennung des Kraftstoffes in den Zylindern darstellt. Dies hat zwar den Vorteil eines geringen Kraftstoffverbrauches, jedoch ist die nachmotorische Stickoxidverminderung erschwert, da sich die Stickoxide in einer insgesamt oxidierend wirkenden Abgasatmosphäre nicht mehr so einfach reduzieren lassen. Während beim Betrieb des Motors mit dem stöchiometrischen Lambdawert eins die Schadstoffe, d. h. die unverbrannten Kohlenwasserstoffe (HC), das Kohlenmonoxid (CO) und die Stickoxide (NOₓ) wirkungsvoll mit einem Dreiwegekatalysator vermindert werden können, ist diese Katalysatortechnik beim mager betriebenen Motor zur NOₓ-Reduktion allein nicht ausreichend.

Als Abhilfe ist es bereits bekannt, die Brennkraftmaschine abwechselnd im Magerbetrieb und im stöchiometrischen Betrieb (λ = 1) oder im Anreicherungsbereich (λ < 1) zu fahren und einen NOₓ-Adsorber in der Abgasleitung vorzusehen, z.B. als separate Einheit vor oder hinter einem Dreiwegekatalysator. In Magerbetriebsphasen werden die Stickoxide vom NOₓ-Adsorber aufgenommen und im stöchiometrischen bzw. Anreicherungsbetriebsphasen wird der NOₓ-Adsorber regeneriert, indem die Adsorptionsreaktionen umgekehrt werden und die Stickoxide desorbiert und in einem nachgeschalteten Katalysatorteil reduziert werden. Ein derartiges Adaorber-Katalysator-System mit Mager-Mix-Betrieb wird in der EP 560 991 beschrieben. Die Umschaltung zwischen Magerbetriebsphasen und stöchiometrischen bzw.

Anreicherungsbetriebsphasen erfolgt dabei zu abgeschätzten Zeitpunkten, so daß das Verfahren insgesamt sehr ungenau ist.

Das Dokument EP 0 713 959 offenbart eine Einrichtung zur Abgasreinigung für eine Brennkraftmaschine, bei dem ein NOₓ-Adsorber benutzt wird, um NOₓ aus dem Abgas zu entfernen. Der NOₓ-Adsorber nimmt NOₓ aus dem Abgas auf, wenn das Verhältnis zwischen Luft und Brennstoff im Abgas klein ist und setzt absorbiertes NOₓ frei und reduziert es zu Stickstoff, wenn das Luft-Brennstoff-Verhältnis im Abgas groß oder stöchiometrisch ist. Um zu verhindern, dass der NOₓ-Adsorber mit absorbiertem NOₓ gesättigt wird, muß der NOₓ- Adsorber periodisch regeneriert werden, in dem das NOₓ im Adsorber freigesetzt und reduziert wird. Festgestellt wurde, dass während des Regenerationsprozesses ein Teil des NOₓ aus dem NOₓ-Adsorber bei hohen Adsorbertemperaturen bei Beginn des Regenerationsprozesses ohne Reduktion des NOₓ abfliesst, wenn ein angereichertes Luft-Brennstoff-Verhältnis im Abgas existiert und dem NOₓ Adsorber zugeführt wird. Dies soll unterbunden werden, in dem der Regenerationsprozess nur bei Temperaturen des NOₓ-Adsorbers unter einer vorbestimmbaren Temperatur geschieht und diese vorbestimmbare Temperatur wird niedrig genug angesetzt um sicherzustellen, dass die Menge des Ausflusses an NOₓ minimiert ist. Hierzu wird die Temperatur des NOₓ-Adsorbers erfasst und eine Regulationseinrichtung veranlasst, die in dem NOₓ-Adsorber gesammelten Stickoxide auszuschleusen und zu Stickstoff zu reduzieren, sowie eine Regenerationssteuereinrichtung, dafür zu sorgen, dass das Luft-Brennstoff-Verhältnis im Abgas, welches über den NOₓ-Adsorber fliesst, angereichert oder stöchiometrisch ist, wenn die Temperatur des NOₓ-Adsorbers geringer ist als die vorbestimmte Temperatur. Eine Berücksichtigung eines differenzierten Beladungszustandes des NOₓ-Adsorbers oder der Fahrsituation ist nicht offenbart.

Das Dokument US 5.595.060 offenbart eine Kontrolleinrichtung und ein Kontrollverfahren für Verbrennungskraftmaschinen mit einem Abgaskatalysator für das Adsorbieren von Stickoxiden im Abgas der Maschine, wobei der Adsorbtionsstatus von Stickoxiden im Katalysator bestimmt wird durch eine elektronische Steuerungseinheit während des Magerbetriebes der Maschine. Wenn der Katalysator mit Stickoxiden gesättigt ist, erfolgt eine Verzögerung des Zündzeitpunktes und das Abgas wird durch den Motoreinlass rezirkuliert bei unverändertem Luft-Brennstoff-Verhältnis. Dadurch wird die Verbrennung verschlechtert und die Maschine fährt mit einer Stickoxide-reduzierenden Atmosphäre aufgrund unverbrannten Gases. Letzlich wird dadurch die Reinigungsfähigkeit des Katalysators wiederhergestellt, um bei weiterem Motorbetrieb den Ausstoss von Stickoxiden zu reduzieren. Das Verfahren lässt sich weder für normale Dieselmaschinen noch für Maschinen mit Abgas-Turbolader einsetzen.

Aus der DE 195 11 548 ist ein Verfahren zur genaueren Bestimmung des Umschaltzeitpunktes bekannt, bei dem der Gehalt des Abgases an Kohlenwasserstoffen (HC), Kohlenmonoxid (CO) oder Stickoxiden (NOₓ) strömungsabwärts vom Stickoxidadsorber gemessen wird und bei Über- bzw. Unterschreiten vorgegebener Schwellwerte umschaltet.

Aus der DE 195 43 219 ist ein Verfahren zum Betreiben eines Dieselmotors bekannt, wobei eine Regeneration des NOₓ-Speicherkatalysators nicht durch einen einfachen Lambda-Sprung realisiert wird, sondern zusätzlich eine Abgasrückführung, eine angepaßte Ansaugluftdrosselung und eine zusätzliche Einspritzung von Kraftstoff vorgesehen sind. Ziel dieser Maßnahme ist es, zum einen ausreichend Reduktionsmittel in Form von Kohlenwasserstoffen (HC) zur NOₓ-Reduktion zur Verfügung zu stellen und zum anderen kurzzeitig im Abgas eine reduzierend wirkende Atmosphäre zu erzeugen, die den Regenerationsprozeß unterstützt. Die Einleitung des Regenerationsbetriebes durch Veränderung der Abgaszusammensetzung wird dabei durch folgende motorische Regelungsmaßnahme vorgenommen:

Zunächst wird der Motor zwischen Speicher- und Regenerationsbetrieb des Speicherkatalysators betrieben. Es erfolgt eine Erfassung des NOₓ-Massenstromes über ein Kennfeld (Drehzahl, Last, Einspritzmenge). Stromab des Speicherkatalysators ist ein NOₓ-Sensor angeordnet, der in Abhängigkeit von Drehzahl, Last und Einspritzmenge bei Erreichen eines NOₓ-Schwellwertes automatisch auf Regenerationsbetrieb umschaltet und die Abgaszusammensetzung entsprechend verändert wird. Diese Veränderung der Abgaszusammensetzung erfolgt durch folgende Motorregelungs-Maßnahmen in Abhängigkeit von Betriebsparametern, nämlich elektronisch geregelte Abgasrückführung, Ansaugluftdrosselung, zusätzliche Nacheinspritzung von Dieselkraftstoff, Optimierung der Abgaszusammensetzung mittels Messung der Rußpartikel und Steuerung der Regeneratortemperatur des Speicherkatalysator über die Abgasklappe oder über den stromauf des Adsorbers angeordneten Brenner. Nachteilig an den bekannten Verfahren ist, daß eine sensorische Erfassung der NOₓ-Werte dazu führt, daß zumindest kurzfristig die Brennkraftmaschine verstärkt NOₓ freisetzt, da zur Vermeidung eines häufigen Umschaltens des Mager-Mix-Betriebes der NOₓ-Schwellwert nicht zu niedrig eingestellt werden kann. Zum anderen kann die automatische Umschaltung zu gefährlichen Fahrsituationen führen, da der Regenerationsbetrieb zu Momenteinbrüchen führen kann, was insbesondere in Beschleunigungs- oder Verzögerungsphasen unerwünscht ist. Eine Regelung bei Verwendung eines Turboladers ist nicht offenbart.

Der Erfindung liegt daher des technische Problem Zugrunde, ein Verfahren und eine Vorrichtung zur Stickoxidreduzierung in Abgas einer Brennkraftmaschine Zu Schaffen, bei der der Stickoxidanstoß gering ist, ohme das Verhalten der Brennkraffmaschine Spürbar zu verändern. Die Lösung des technischen Problems ergibt sich durch die Merkmale der Patentansprüche 1 und 12.

Dabei wird der Beladungszustand des NOₓ-Speicherkatalysators mittels zweier Schwellwerte in drei Bereiche unterteilt, nämlich "Regenerierung nicht nötig", "Regenerierung nötig" und "Regenerierung dringend nötig". Um das Betriebsverhalten der Brennkraftmaschine so wenig wie möglich zu beeinflussen, findet eine Regenerierung des NOₓ-Speicherkatalysators im Zustand "Regenerierung nötig" nur statt, wenn die dazu notwendigen Betriebsparameter erfüllt sind und die Betriebssituation eine Regenerierung erlaubt. Andernfalls wird so lange gewartet, bis der Zustand "Regenerierung dringend nötig" erreicht wird. In diesem Fall wird durch verschiedene Maßnahmen, die einzeln oder in Kombination erfolgen, auf die Betriebsparameter derart Einfluß genommen, daß eine Regenerierung ermöglicht wird, wenn dies die Fahrsituation erlaubt. Ändert sich während der Regenerierung die Betriebssituation derart, daß die veränderten Betriebsparameter dem notwendigen Betriebsverhalten der Brennkraftmaschine entgegenstehen (z.B. notwendige Beschleunigung eines Kraftfahrzeuges), so wird der Regenerationsvorgang sofort unter- bzw. abgebrochen, wodurch sichergestellt wird, daß durch den Regenerationsprozeß keine gefährlichen Betriebssituationen eintreten können. Nach einer Unterbrechung des Regenerationsvorgangs wird der Beladungszustand des NOₓ-Speicherkatalysators mit dem Schwellwert "Regenerierung nötig" verglichen. Bei einer Unterschreitung des Schwellwertes wird der Regenerierungsvorgang beendet. Liegt der Wert des Beladungszustandes oberhalb des Schwellwertes wird die Regeneration dann erst wieder aufgenommen, wenn die Fahrsituation dies erlaubt.

Um das Verfahren bei einem Turbodiesel anwenden zu können, ist dieser zusätzlich mit einer sonst nicht vorhandenen Drosselklappe auszustatten, die vor dem Ansaugkrümmer angeordnet ist. Weitere vorteilhafte Ausgestaltungen der Erfindung ergeben sich aus den Unteransprüchen.

Die Erfindung wird nachfolgend anhand eines bevorzugten Ausführungsbeispieles näher erläutert. Die Fig. zeigen:
- Fig. 1: ein Funktionsablauf des Verfahrens für einen Dieselmotor,
- Fig. 2: einen Regelkreislauf zur Ansteuerung einer Drosselklappe und
- Fig. 3: eine funktionale Darstellung der Filterparameter des Regelkreislaufes der Drosselklappe.

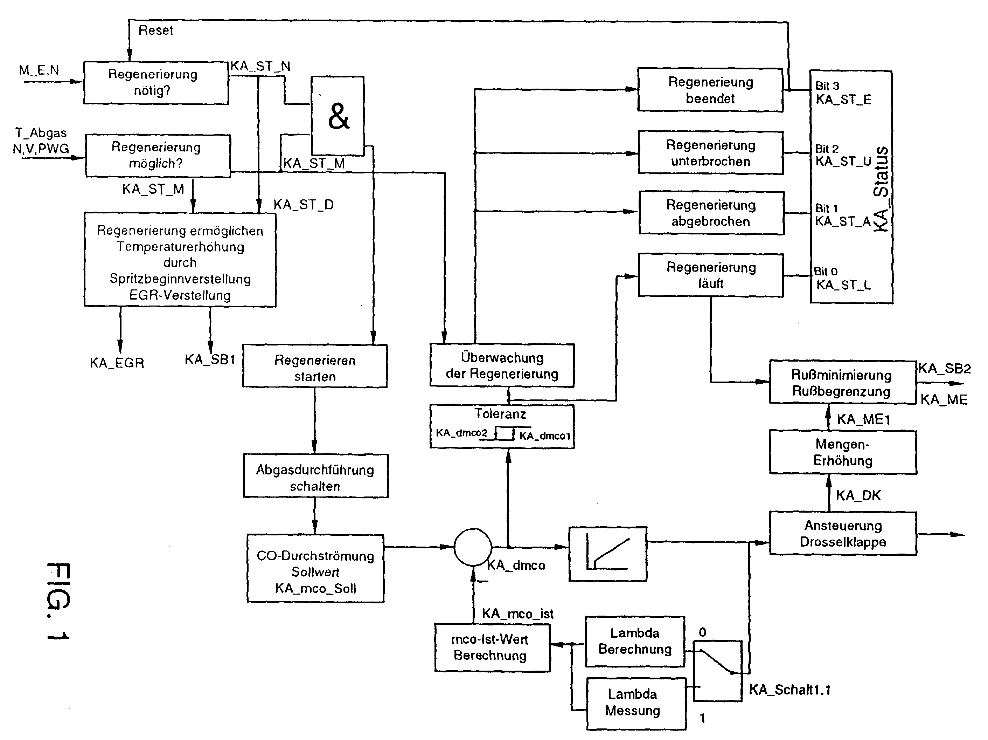

In der Fig. 1 ist ein Funktionsablauf für einen Dieselmotor dargestellt. Die Regenerierung des NOₓ-Speicherkatalysators kann im wesentlichen in fünf Verfahrensschritten unterteilt werden, nämlich
a) Ermittlung, ob eine Regenerierung erfolgen soll,
b) ob diese erfolgen kann, mit entsprechender Zustandsbeeinflussung,
c) dem eigentlichen Ablauf der Regenerierung mit entsprechender Vorbereitungsphase,
d) der Regelung mit Ansteuerung der Drosselklappe und Mengenerhöhung und
e) der Überwachung mit Zustandskoordination und Abschaltung.

Die Erkennung, ob eine Regenerierung notwendig ist, kann auf drei verschiedene Arten erfolgen, die wahlweise einzeln oder in Kombination selektierbar sind, nämlich über eine Zeitfunktion, eine Betriebsfunktion und/oder eine Verbrauchsfunktion. Die Bestimmung über die Zeit erfolgt dabei über eine einfache Korrelation. Nachdem erkannt wurde, daß eine vorhergehende Regenerierung beendet, abgebrochen oder unterbrochen wurde, läuft die Beladungsphase, d. h. der NOₓ-Speicherkatalysator nimmt NOₓ auf. Dazu wird zunächst der aktuelle Beladungszustand des Katalysators ausgelesen und mit Hilfe einer empirisch ermittelten Kennlinie in eine Zeit umgewandelt, nämlich die Zeit, die benötigt wurde, den aktuellen Beladungszustand des NOₓ-Speicherkatalysators zu erreichen. Diese Zeit dient als Startwert für einen Timer oder Zähler, der so lange läuft bis eine neue Regenerierung gestartet wird. Während der Timer läuft, wird ständig der aktuelle Zeitwert mittels der oben beschriebenen Kennlinie wieder in einen entsprechenden Beladungszustand des NOₓ-Speicherkatalysators umgerechnet. Wenn der Beladungszustand eine erste bzw. zweite Schwelle überschreitet, wird der Zustand "Katalysatorentladung nötig" KA_ST_N bzw. "Katalysatorentladung dringend nötig" KA_ST_D gesetzt. Gestoppt wird der Zeitlauf durch ein Signal, das anzeigt, daß die Regenerierung läuft. Initialisiert und erneut gestartet wird die Funktion durch ein Signal, daß die Regenerierung nicht läuft, abgebrochen oder unterbrochen ist. Die beiden Signale können dabei sowohl separat erzeugt werden, als auch durch Invertierung jeweils voneinander abgeleitet werden.

Neben der beschriebenen Zeitfunktion ist auch ein Zusammenhang zwischen gefahrenen Motorbetriebspunkten (Drehzahl N, aktuelle Einspritzmenge M_E) oder der NOₓ-Entstehung applizierbar. Aus den gefahrenen Betriebspunkten werden die in einem Kennfeld abgelegten Informationen der NOₓ-Entstehung ausgelesen und in einem Speicher aufsummiert. Um den Einfluß der Temperatur zu erfassen, können die aus dem Kennfeld ausgelesene Werte vor ihrer Aufsummierung mit einem Korrekturfaktor gewichtet werden. Start, Stop und Initialisierung erfolgt dabei über die gleichen Signale wie bei der zuvor beschriebenen Zeitfunktion. Analog ist auch eine Ermittlung über den Verbrauch von Kraftstoff mittels eines entsprechenden Kennfeldes möglich.

Zweck der Unterscheidung zwischen den Zuständen "Regenerierung nötig" KA_ST_N und "Regenerierung dringend nötig" KA_ST_D ist , daß nur bei dem Zustand KA_ST_D Maßnahmen zur Einleitung der Möglichkeit des Regenerierens getroffen werden sollten und sonst nicht, um das Fahrverhalten möglichst wenig zu beeinflussen.

Die Regenerierung des NOₓ-Speicherkatalysators ist nur bei speziellen Voraussetzungen möglich. Die Abgastemperatur T_Abgas muß innerhalb bestimmter Grenzen liegen und der NOₓ-Speicherkatalysator muß mit ausreichend Kohlenmonoxid CO durchströmt werden. Des weiteren soll die Regenerierung während des Fahrbetriebes laufen, ohne daß dies im Fahrzeugverhalten spürbar ist. Daher erfolgt die Regenerierung vorzugsweise in Schubphasen bzw. in Phasen niedriger Last. Die Einhaltung dieser Voraussetzungen kann durch Applikation der Schwellwerte für den Pedalwertgeber PWG und/oder der Einspritzmenge M_E erfolgen. Es ist auch möglich diese Informationen aus der Drehzahl N sowie dem Schuberkennungs- oder Bremssignal abzuleiten. Falls eine oder mehrere dieser Möglichkeiten nicht benötigt werden, so können diese durch entsprechende Wahl der Schwellwerte oder soft- oder hardwaremäßige Schalter außer Betrieb genommen werden.

Falls es in der später näher beschriebenen Überwachungsfunktion zu einem Zeitabbruch gekommen ist, braucht der NOₓ-Speicherkatalysator eine Pause bis dieser wieder zur Regenerierung bereits ist. Deshalb läuft parallel zu den anderen Funktionen dieser Gruppe eine Zeitfunktion, die diese Eigenschaft des NOₓ-Speicherkatalysators darstellt, wobei die Zeitfunktionen jeweils durch ein entsprechendes Abbruchsignal gestartet wird. Wenn bis auf Lambda alle Bedingungen erfüllt sind, ist die Regenerierung möglich und das Signal KA_ST_M wird gesetzt und die Regenerierung gestartet.

Tritt der Zustand "Regenerierung dringend notwendig" KA_ST_D ein, aber das Signal KA_ST_M kann nicht gesetzt werden, so müssen die Zustände derart geändert werden, daß die Bedingungen für das Setzen des Signals KA_ST_M erfüllt sind. Befindet sich die Abgastemperatur T_Abgas in einem Bereich, in dem eine Regeneration nicht möglich ist, so kann diese durch verschiedene Maßnahmen beeinflußt werden. Eine Möglichkeit ist z.B. die Verstellung des Spritzbeginn. Aus einem entsprechenden Kennfeld ist auslesbar, um wieviel der Spritzbeginn verstellt werden muß, um die Abgastemperatur von ihrem aktuellen Wert in den Bereich der Regeneration zu verschieben. Entsprechend dem ausgelesenen Wert für den Spritzbeginn wird ein Signal KA_SB1 erzeugt, daß den Spritzbeginn verstellt. Eine weitere Möglichkeit zur Beeinflussung der Abgastemperatur T_Abgas ist die Verstellung der Abgasrückführung. Analog zum Spritzbeginn kann mittels eines Kennfeldes ermittelt werden, wie die Abgasrückführung EGR verstellt werden muß, um die Abgastemperatur T-Abgas von ihrem aktuellen Wert in den Regenerationsbereich zu verschieben. Zur Verstellung wird ein Signal KA_EGR erzeugt. Die beiden beschriebenen Einflußgrößen können sowohl alternativ als auch kumulativ Anwendung finden.

Als Verbereitung wird optimal die Abgasrückführung EGR abgeschaltet, falls Lambda berechnet werden soll. Die Auswahl, ob die Abgasrückführung EGR abgeschaltet wird oder nicht, erfolgt z. B. über einen Softwareschalter mit dem Signal KA_Schalt 1.1. Außerdem muß die Schubabschaltung deaktiviert werden, da ohne Einspritzmenge M_E kein CO entstehen kann. Der Sollwert der CO-Durchströmung, der eingeregelt werden soll, wird als KA_mco_Soll abgelegt. Wenn die Abweichung KA_dmco zwischen KA_mco_Soll und dem Ist-Wert der CO-Durchströmung KA_mco_lst unter einen Toleranzwert KA_dmco1 fällt, ist die Voraussetzung zur Regeneration erfüllt und die eigentliche Regeneration beginnt.

Im folgenden soll die Funktions- und Wirkungsweise der Abgasrückführung EGR erläutert werden. Wie bereits ausgeführt, hat die Abgasrückführung EGR einen entscheidenden Einfluß auf die Regenerierung des Katalysators und kann auch als Stellgröße benutzt werden, da bei entsprechender Last eine erhöhte Abgasrückführung EGR zu einer deutlichen Steigerung der CO-Durchströmung beitragen kann. In Situationen niedriger Last bzw. Schubbetrieb ist im Abgas der Sauerstoffanteil recht hoch, so daß durch eine Erhöhung der Abgasrückführung EGR der Sauerstoffanteil der Ansaugluft nicht entscheidend erniedrigt und somit der CO-Anteil im Abgas nicht wesentlich erhöht wird. Bei höheren Lastpunkten des Motors hingegen ist der Sauerstoffanteil sehr niedrig, so daß eine starke Beeinflussung möglich ist. Aufgrund der Abhängigkeiten zwischen Lambda und der CO-Konzentration ist es sinnvoll, die Abgasrückführung EGR erst bei Lambda-Werten kleiner ca. 1,3 zu aktivieren, da die Abgasrückführung EGR sonst keine Wirkung hat. Die Schaltung der Abgasrückführung EGR erfolgt also in Abhängigkeit von der Last, des Lambdawertes und ob Lambda gemessen oder berechnet wird.

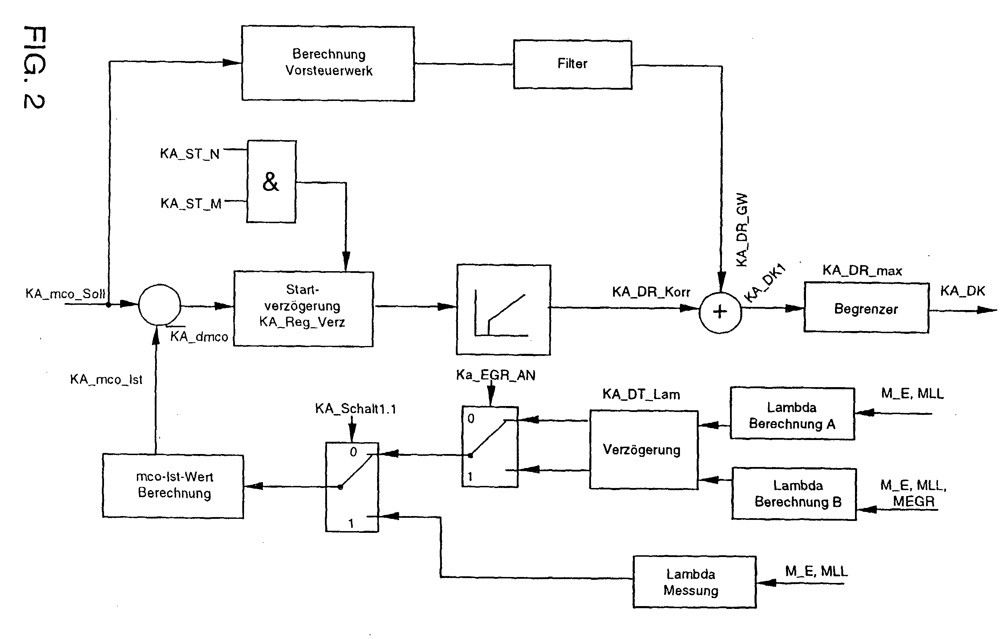

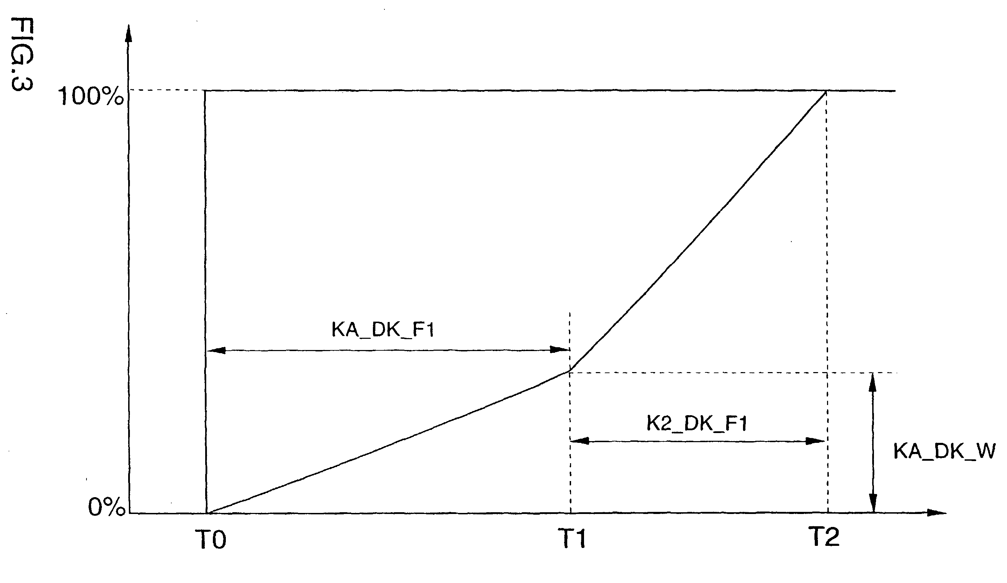

In Fig. 2 ist die Regelung der Drosselklappe dargestellt. Zuerst erfolgt eine Vorsteuerung, bei der der Sollwert der CO-Durchströmung KA_mco_Soll in eine entsprechende Drosselklappenstellung umgerechnet und die Drosselklappe entsprechend angesteuert wird. Der Ausgangspunkt der Vorsteuerung kann durch einen Filter gedämpft werden. Die Parameter des Filter KA_DK_F1 und KA_DK_F2 geben, wie aus Fig. 3 ersichtlich, die Zeiten der Verzögerung an. Der Parameter KA_DK_W gibt an, bis zu wie viel Prozent der der Wertänderung des Vorsteuersignals die Zeit KA_DE_F1 wirken soll. Nach einer Startverzögerung KA_Reg_verz, die durch die Signale KA_ST_N und KA_ST_M getriggert wird, beginnt die Regelung damit den Differenzwert KA_dmco=KA_mco_Soll - KA_mco_Ist auszuregeln und gibt die Stellgröße KA_DK_Korr als additiven Wert auf den Grundwert KA_DK_GW, der am Ausgang des Filters anliegt, ab. Das Ergebnis ist die Variable KA_DK 1, die durch einen nachgeschalteten Begrenzer auf einen applizierten Wert KA_DK_max limitiert und wird zur Steuergröße KA_DK. Zur Berechnung von der CO-Durchströmung KA_mco_Ist muß Lambda bekannt sein, wobei Lambda entweder gemessen oder berechnet werden kann, wobei die Auswahl über das Signal KA_Schalt 1.1 erfolgt. Durch das Signal KA_EGR_An wird zwischen zwei verschiedenen Berechnungen von Lambda umgeschaltet. Bei inaktiver Abgasrückführung EGR kann Lambda aus der gemessenen Luftmasse MLL und der Einspritzmenge M_E berechnet werden (Berechnung A). Ist die Abgasrückführung EGR aktiv (Berechnung B), muß zusätzlich der Anteil der Luftmasse durch Abgasrückführung M_{EGR} berücksichtigt werden. Nachdem Lambda berechnet wurde, kann eine Zeitverzögerung KA_DT_LAM eingestellt werden, um die bei der Berechnung unberücksichtigt gelassene Laufzeit zu kompensieren.

Damit genügend CO entstehen kann, ist eine Mengenerhöhung erforderlich. Da bei geschlossener Drosselklappe das Drehmoment nicht so erheblich durch die Einspritzmenge beeinflußt wird bei offener Drosselklappe, kann die Einspritzmenge auf einen maximalen, durch die Rußbildung begrenzten Wert erhöht werden. Es ist jedoch darauf zu achten, daß die Mengenerhöhung nur vorgenommen wird, wenn die Drosselklappe geschlossen ist bzw. geschlossen wird, um eine Veränderung des Drehmomentes zu verhindern. Je nach Stellung der Drosselklappe KA_DK und der aktuellen Drehzahl N kann die Einspritzmenge M_E erhöht werden, wobei der Zusammenhang in einem Kennfeld appliziert ist. Der Ausgangswert läßt sich optimal noch durch eine Filterfunktion analog zu der in Figur 2 dämpfen. Anschließend wird der gefilterte Wert KA_ME 1 mittels eines weiteren Kennfeldes auf den maximalen Wert KA_ME_max für die Einspritzmenge KA_ME während der Regenerierung begrenzt.

Anschaulich ist die Funktion "Überwachung der Regenerierung" invers zu der Funktion "Regenerierung nötig ?", wobei zwei unterschiedliche Funktionsweisen auswählbar sind, nämlich eine zeitliche Zuordnung oder eine Berechnung der Entladung. Bei der zeitlichen Zuordnung wird der Beladungszustand, der in der Funktion "Regenerieren nötig ?" ermittelt wurde, als Initialisierungswert benutzt. Die Zuordnung des Beladungszustandes zu einer Zeit erfolgt dabei über ein entsprechendes Kennfeld wie bei der Funktion "Regenerieren nötig ?". So lange die Regenerierung läuft, zählt ein Zähler rückwärts und ein Status-Bit KA_ST_L wird gesetzt. Wird ein einstellbarer Zählerstand erreicht, wird die Regeneration beendet und ein Status-Bit KA_ST_E gesetzt, das Status-Bit KA_ST_L zurückgesetzt und der normale Fahrbetrieb wieder aufgenommen. Alternativ kann der Beladungszustand berechnet werden. Parallel zur Kontrolle des Beladungszustandes des Katalysators erfolgt eine zeitliche Überwachung des Regenerationsvorganges, da bei Überschreitung einer bestimmten Zeit die Umsetzung der im Katalysator gespeicherten Stickoxide nicht mehr gewährleistet ist. Wird diese Zeit erreicht, so wird ein Status-Bit KA_ST_U gesetzt, das die Unterbrechung der Regeneration signalisiert. Nach Ablauf einer bestimmten Zeit kann dann die Regeneration wieder fortgesetzt werden. Unterbrechung bedeutet, daß die Ansteuerung der Drosselklappe zunächst noch aktiv bleibt, jedoch die später noch erläuterte Funktion Rußminimierung abgestellt wird. Mit Hilfe der bereits erläuterten Maßnahmen zur Ermöglichung der Regenerierung kann kurzfristig versucht werden, die Regeneriermöglichkeit wieder herzustellen. Gelingt dies nicht innerhalb der Zeitüberwachung, so wird die Regenerierung abgebrochen und das Status-Bit KA_ST_A gesetzt. Alle Funktionen im Zusammenhang mit der Regenrierung werden abgebrochen bzw. beendet. Der aktuelle Beladungszustand wird ermittelt und als Initialisierungswert an die Funktion "Regenerieren nötig?" übergeben. Zusätzlich erfolgt eine ständige Überwachung des Status Regenerieren möglich KA_ST_M. Wenn diese notwendige Voraussetzung nicht erfüllt ist, kommt es zu einer Unterbrechung und gegebenenfalls zu einem Abbruch der Regenerierung und das Status-Bit KA_ST_A wird gesetzt.

Eine Beeinflussung der Rußbildung ist einerseits durch eine Verstellung des Spritzbeginns und andererseits durch die Begrenzung der Einspritzmenge M_E möglich. Durch geeignete Wahl des Spritzbeginns in Abhängigkeit des Motorbetriebspunktes kann die Rußbildung reduziert werden. In Abhängigkeit von Drehzahl N und Einspritzmenge M_E kann aus einem Kennfeld ein geeigneter Wert KA_SB2 für den Spritzbeginn ausgelesen werden. Da eine Verstellung des Spritzbeginns nicht immer eine ausreichende Maßnahme zur darstellt, kann alternativ oder kumulativ die Einspritzmenge während der Regenerierungsphase begrenzt werden. Die zulässige Einspritzmenge KA_ME kann aus einem weiteren Kennfeld in Abhängigkeit von der Drehzahl N und dem Pedalwertgeber PWG ausgelesen werden.

## Patentansprüche

1. Verfahren zur Stickoxidreduzierung im Abgas einer Brennkraftmaschine, umfassend folgende Verfahrensschritte:
a) Ermittlung des Beladungszustandes eines NOₓ - Speicherkatalysator,
b) bei Überschreitung eines ersten Schwellwertes des Beladungszustandes Prüfung, ob die Abgastemperatur T_Abgas und/oder der Lambda-Wert und/oder die Fahrsituation eine Regeneration zulassen,
c) Einleitung der Regeneration, falls die Parameter Abgastemperatur T_Abgas und Fahrsituation dies erlauben, sonst Wiederholung von Verfahrensschritt b) solange, bis die Parameter eine Regeneration erlauben oder ein zweiter Schwellwert des Beladungszustandes überschritten wird,
d) bei Überschreitung des zweiten Schwellwertes Veränderung der Einstellung von Spritzbeginn und/oder der Abgasrückführung EGR und/oder der Drosselklappenstellung zur Einstellung der notwendigen Regenerationsparameter, wenn die Fahrsituation es erlaubt,
e) Durchführung der Regeneration bis der Beladungszustand den ersten Schwellwert unterschreitet oder Abbruch der Regeneration, falls die Fahrsituation dies erfordert und Wiederholung von Verfahrensschritt b) oder d) je nach Beladungszustand.

2. Verfahren nach Anspruch 1, **dadurch gekennzeichnet, daß** die Ermittlung des Beladungszustand des NOₓ-Speicherkatalysators durch eine Zeitfunktion und/oder eine Verbrauchsfunktion und/oder eine Summationsfunktion in Abhängigkeit von den gefahrenen Betriebspunkten erfolgt.

3. Verfahren nach Anspruch 1 oder 2, **dadurch gekennzeichnet, daß** die Regenerierung nur in Schubphasen oder bei niedriger Last erfolgt.

4. Verfahren nach Anspruch 3, **dadurch gekennzeichnet, daß** die Fahrsituation wahlweise aus einem Schwellwert für den Pedalwertgeber PWG und/oder der Einspritzmenge M_E und/oder aus der Drehzahl N und/oder einem Schuberkennungs- und/oder Bremssignal und/oder einem Drehzahlgradienten abgeleitet wird.

5. Verfahren nach einem der vorangegangenen Ansprüche, **dadurch gekennzeichnet, daß** die Abgasrückführung EGR wahlweise abschaltbar ist.

6. Verfahren nach einem der vorangegangenen Ansprüche, **dadurch gekennzeichnet, daß** die Abgasrückführung EGR nur bei Unterschreitung eines voreinstellbaren Lambda-Wertes zugeschaltet wird.

7. Verfahren nach einem der vorangegangenen Ansprüche, **dadurch gekennzeichnet, daß** zur Durchführung der Regeneration des NOₓ-Speicherkatalysators die Einspritzmenge M_E erhöht wird.

8. Verfahren nach Anspruch 7, **dadurch gekennzeichnet, daß** die Erhöhung der Einspritzmenge M_E nur bei geschlossener Drosselklappe oder während des Schließvorganges der Drosselklappe vorgenommen wird.

9. Verfahren nach einem der vorangegangenen Ansprüche, **dadurch gekennzeichnet, daß** der Regeneriervorgang mittels einer Zeitfunktion und/oder mittels einer Motorbetriebspunkt- und Lambdafunktion überwacht wird und bei Überschreiten eines einstellbaren Schwellwertes die Regeneration unterbrochen wird.

10. Verfahren nach einem der vorangegangenen Ansprüche, **dadurch gekennzeichnet, daß** der Regeneriervorgang in Abhängigkeit der Fahrsituation überwacht und bei Unterschreiten des zweiten Schwellwertes unterbrochen wird.

11. Verfahren nach einem der vorangegangenen Ansprüche, **dadurch gekennzeichnet, daß** nach einer Unterbrechung des Regeneriervorgangs der Beladungszustand des NOₓ-Speicherkatalysators mit dem ersten Schwellwert verglichen und bei Unterschreitung des Schwellwertes der Regeneriervorgang beendet wird.

12. Anwendung des Verfahrens nach einem der vorangegangenen Ansprüche bei einem Turbodiesel, wobei zur Regenerierung eines NOₓ-Speicherkatalysators an eine vor dem Ansaugkrümmer angeordnete Drosselklappe verwendet wird.

## Claims

1. Method for reducing nitrogen oxides in the exhaust gas from an internal-combustion engine, comprising the following method steps:
a) determining the loading state of an NOₓ storage catalytic converter,
b) in the event of a first threshold value of the loading state being exceeded, checking whether the exhaust-gas temperature T_exhaust and/or the lambda value and/or the driving situation allow regeneration,
c) initiating regeneration if the parameters exhaust-gas temperature T_exhaust and driving situation allow, otherwise repeating method step b) until the parameters allow regeneration or a second threshold of the loading state is exceeded.
d) when the second threshold is exceeded, changing the setting of start of injection and/or the exhaust-gas recirculation EGR and/or the throttle valve position in order to set the required regeneration parameters if the driving situation allows,
e) carrying out the regeneration until the loading state falls below the first threshold or stopping the regeneration if the driving situation requires, and repeating method step b) or d), depending on the loading state.

2. Method according to Claim 1, **characterized in that** the loading state of the NOₓ storage catalytic converter is determined by means of a time function and/or a consumption function and/or a sum function, depending on the driven operating points.

3. Method according to Claim 1 or 2, **characterized in that** the regeneration takes place only in overrun phases or at low load.

4. Method according to Claim 3, **characterized in that** the driving situation is optionally derived from a threshold value for the pedal value transmitter PWG and/or the injection quantity M_E and/or from the rotational speed N and/or an overrun detection and/or braking signal and/or a rotational-speed gradient.

5. Method according to one of the preceding claims, **characterized in that** the exhaust-gas recirculation EGR can optionally be switched off.

6. Method according to one of the preceding claims, **characterized in that** the exhaust-gas recirculation EGR is switched on only when the lambda value falls below a presettable value.

7. Method according to one of the preceding claims, **characterized in that** the injection quantity M_E is increased in order to carry out the regeneration of the NOₓ storage catalytic converter.

8. Method according to Claim 7, **characterized in that** the increase in the injection quantity M_E is carried out only with the throttle valve closed or during the closing operation of the throttle valve.

9. Method according to one of the preceding claims, **characterized in that** the regeneration operation is monitored by means of a time function and/or by means of an engine operating point and lambda function and the regeneration is interrupted when a settable threshold value is exceeded.

10. Method according to one of the preceding claims, **characterized in that** the regeneration operation is monitored as a function of the driving situation and is interrupted when the loading state falls below the second threshold value.

11. Method according to one of the preceding claims, **characterized in that**, after the regeneration operation has been interrupted, the loading state of the NOₓ storage catalytic converter is compared with the first threshold value, and if it is lower than the threshold value the regeneration operation is ended.

12. Use of the method according to one of the preceding claims in a turbo diesel, in which to regenerate an NOₓ storage catalytic converter it is used on a throttle valve arranged upstream of the intake manifold.

## Revendications

1. Procédé de réduction des oxydes d'azote dans le gaz de rejet d'une machine à combustion interne, comprenant les étapes de procédé suivantes:
a) la détermination de l'état de chargement d'un catalyseur d'accumulation NOₓ,
b) le contrôle, en cas de dépassement d'une première valeur seuil de l'état de chargement, du fait de savoir si la température des gaz de rejet T_gaz_de_rejet et/ou la valeur lambda et/ou la situation de conduite/de fonctionnement permet ou permettent une régénération,
c) l'amorce de la régénération, au cas où les paramètres température des gaz de rejet T_gaz_de_rejet et situation de conduite le permettent, sinon répétition de l'étape de procédé b) jusqu'à ce que les paramètres permettent une régénération ou jusqu'à ce qu'une deuxième valeur seuil de l'état de chargement soit dépassée,
d) la modification, en cas de dépassement de la deuxième valeur seuil, du réglage du début de la pulvérisation et/ou du recyclage des gaz de rejet EGR et/ou de la position des clapets d'étranglement en vue du réglage des paramètres de régénération nécessaires, quand la situation de conduite le permet,
e) l'exécution de la régénération, jusqu'à ce que l'état de chargement passe en dessous de la première valeur seuil, ou l'interruption de la régénération, au cas où la situation de conduite le demande, et la répétition de l'étape de procédé b) ou d), selon l'état de chargement.

2. Procédé selon la revendication 1, **caractérisé en ce que** la détermination de l'état de chargement du catalyseur d'accumulation NOₓ se fait par une fonction de temps et/ou par une fonction de consommation et/ou par une fonction de sommation, en fonction des points de fonctionnement parcourus.

3. Procédé selon la revendication 1 ou 2, **caractérisé en ce que** la régénération ne se fait qu'en phases de poussée ou pour une charge faible.

4. Procédé selon la revendication 3, **caractérisé en ce que** la situation de conduite peut être dérivée au choix d'une valeur seuil pour le donneur de valeur pédale PWG et/ou pour la quantité d'injection M_E et/ou du nombre de tours N et/ou d'un signal de détermination de la poussée et/ou d'un signal de freinage et/ou d'un gradient de nombres de tours.

5. Procédé selon l'une quelconque des revendications précédentes, **caractérisé en ce que** le recyclage des gaz de rejet EGR peut, au choix, être mis à l'arrêt.

6. Procédé selon l'une quelconque des revendications précédentes, **caractérisé en ce que** le recyclage des gaz de rejet EGR n'est mise en action que lors du passage en dessous d'une valeur lambda réglée au préalable.

7. Procédé selon l'une quelconque des revendications précédentes, **caractérisé en ce que** l'on augmente, en vue de l'exécution de la régénération du catalyseur d'accumulation NOₓ, la quantité d'injection M_E.

8. Procédé selon la revendication 7, **caractérisé en ce que** l'augmentation de la quantité d'injection M_E n'est entreprise que pour un clapet d'étranglement fermé ou que pendant la procédure de fermeture du clapet d'étranglement.

9. Procédé selon l'une quelconque des revendications précédentes, **caractérisé en ce que** la procédure de régénération est surveillée par l'intermédiaire d'une fonction de temps et/ou d'une fonction de point de fonctionnement du moteur et d'une fonction lambda et **en ce que** la régénération est interrompue lors du dépassement d'une valeur seuil réglable.

10. Procédé selon l'une quelconque des revendications précédentes, **caractérisé en ce que** la procédure de régénération est surveillée en fonction de la situation de conduite et est interrompue en cas de passage en dessous de la deuxième valeur seuil.

11. Procédé selon l'une quelconque des revendications précédentes, **caractérisé en ce qu'**après une interruption de la procédure de régénération, l'on compare l'état de chargement du catalyseur d'accumulation NOₓ à la première valeur seuil et **en ce que** l'on termine la procédure de régénération en cas de passage sous la valeur seuil.

12. Utilisation du procédé selon l'une quelconque des revendications précédentes pour un moteur turbo diesel, un clapet d'étranglement, disposé avant le collecteur d'admission, étant utilisé en vue de la régénération d'un catalyseur d'accumulation NOₓ.
